(19) **Europäisches Patentamt / European Patent Office / Office européen des brevets**

(11) **EP 4 231 221 A1**

(12) **EUROPEAN PATENT APPLICATION**
published in accordance with Art. 153(4) EPC

(43) Date of publication:
**23.08.2023 Bulletin 2023/34**

(21) Application number: **22819258.9**

(22) Date of filing: **06.05.2022**

(51) International Patent Classification (IPC):
**G06Q 20/38** (2012.01)

(52) Cooperative Patent Classification (CPC):
**G06Q 20/3829; G06Q 20/102; G06Q 20/308; G06Q 40/04; H04L 9/50**

(86) International application number:
**PCT/CN2022/091063**

(87) International publication number:
**WO 2022/257656 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.06.2021 CN 202110654338**

(71) Applicant: **Tencent Technology (Shenzhen) Company Limited Shenzhen, Guangdong, 518057 (CN)**

(72) Inventors:
• **ZHANG, Xiaoyi**
  **Shenzhen, Guangdong 518057 (CN)**
• **GUO, Runzeng**
  **Shenzhen, Guangdong 518057 (CN)**

(74) Representative: **Eisenführ Speiser Patentanwälte Rechtsanwälte PartGmbB Postfach 31 02 60 80102 München (DE)**

(54) **TRANSACTION PROCESSING METHOD AND APPARATUS, MEDIUM AND ELECTRONIC DEVICE**

(57) A transaction processing method, a transaction processing apparatus, a computer-readable medium, and an electronic device in the technical field of blockchain. The transaction processing method comprises: according to transaction data recorded in a blockchain, performing availability detection of each blockchain node, and determining whether each blockchain node is a normal node or an abnormal node; when a transaction request is generated by means of an abnormal mode, transmitting the transaction request to a normal node, and cooperatively processing the transaction request by means of the normal node and the abnormal node. The present method can improve continuity and stability reliability of transaction services.

— S410

Perform availability detection on each of blockchain nodes according to transaction data recorded in a blockchain network, to determine whether each of the blockchain nodes is a normal node or an abnormal node

— S420

Transmit, in a case that a transaction request is generated through the abnormal node, the transaction request to the normal node, and cooperatively process the transaction request by using the abnormal node and the normal node

FIG. 4

**Description**

This application claims priority to Chinese Patent Application No. 2021106543389, entitled "TRANSACTION PROCESSING METHOD AND APPARATUS, MEDIUM, AND ELECTRONIC DEVICE" and filed with the China National Intellectual Property Administration on June 7, 2021 , which is incorporated herein by reference in its entirety.

FIELD

This application relates to the technical field of blockchains, and in particular, to a transaction processing technology in a blockchain.

BACKGROUND

In the massive online and offline transaction services, it is inevitable that abnormal or failed transactions occur due to device failure or other factors. A key to ensure the service continuity, stability and reliability of transaction services is how to eliminate faults quickly and accurately.

SUMMARY

A transaction processing method, a transaction processing apparatus, a computer-readable medium, and an electronic device are provided according to embodiments of the present disclosure, which can quickly and accurately eliminate faults in a transaction service system, thereby ensuring service continuity, stability and reliability of transaction services.

According to an aspect of the embodiments of the present disclosure, a transaction processing method is provided, which includes: performing availability detection on blockchain nodes according to transaction data recorded in a blockchain network, to determine whether each of the blockchain nodes is a normal node or an abnormal node; and transmitting, in a case that a transaction request is generated through the abnormal node, the transaction request to the normal node, and cooperatively processing the transaction request by the abnormal node and the normal node.

According to an aspect of the embodiments of the present disclosure, a transaction processing apparatus is provided, which includes a detection module and a processing module. The detection module is configured to perform availability detection on blockchain nodes according to transaction data recorded in a blockchain network, to determine whether each of the blockchain nodes is a normal node or an abnormal node. The processing module is configured to transmit, in a case that a transaction request is generated through the abnormal node, the transaction request to the normal node, and cooperatively process the transaction request by the abnormal node and the normal node.

According to an aspect of the embodiments of the present disclosure, a computer-readable medium is provided, which stores a computer program. The computer program, when executed by a processor, implements the transaction processing method in the technical solution.

According to an aspect of the embodiments of the present disclosure, an electronic device is provided, which includes: a processor; and a memory, configured to store executable instructions of the processor. The processor is configured to perform the transaction processing method in the technical solution by executing the executable instructions.

According to an aspect of the embodiments of the present disclosure, a computer program product or a computer program is provided, the computer program product or the computer program includes computer instructions, the computer instructions are stored in a computer-readable storage medium. A processor of a computer device reads the computer instructions from the computer-readable storage medium, and executes the computer instructions, to cause the computer device to perform the transaction processing method in the technical solution.

In the technical solution according to the embodiments of the present disclosure, with the solution in which a normal node may assist an abnormal node to perform transaction processing through data transmission between the abnormal node and the normal node, a problem of an abnormal transaction or failed transaction on the abnormal node can be solved, and transaction interruption can also be avoided, thereby improving the continuity, stability and reliability of transaction services, thus providing long-term autonomous disaster recovery capability for a service system.

BRIEF DESCRIPTION OF THE DRAWINGS

FIG. 1 is a schematic diagram of a blockchain system.

FIG. 2 is a schematic diagram of a structure of a blockchain maintained in a blockchain network.

FIG. 3 is a schematic diagram of a process of generating a new block.

FIG. 4 a schematic flowchart of a transaction processing method according to an embodiment of the present disclosure.

FIG. 5 is a schematic flowchart of a service for generating transaction data according to an embodiment of the present disclosure.

FIG. 6 is a schematic flowchart of a service for performing fault detection according to an embodiment of the present disclosure.

FIG. 7 is a schematic flowchart of a service for performing fault recovery according to an embodiment of the present disclosure.

FIG. 8 is a schematic flowchart of a step of performing availability detection on a blockchain node according to an embodiment of the present disclosure.

FIG. 9 is a schematic flowchart of a step of determining a quantity of transaction failures according to an embodiment of the present disclosure.

FIG. 10 is a schematic flowchart of a step of performing transaction request transmission according to an embodiment of the present disclosure.

FIG. 11 is a schematic flowchart of a step of cooperatively processing a transaction request by an abnormal node and a normal node according to an embodiment of the present disclosure.

FIG. 12 is a schematic structural block diagram of a transaction processing apparatus according to an embodiment of the present disclosure.

FIG. 13 is a schematic structural block diagram of a computer system adapted to implement an electronic device according to an embodiment of the present disclosure.

DESCRIPTION OF EMBODIMENTS

The technical solution according to the embodiments of the present disclosure is mainly applied to transaction service scenarios such as online payment and transfer implemented by using blockchain technologies. With a smart contract and block content of the blockchain technologies, a service processing state and capability of offline devices may be detected and adjusted, so as to ensure that a transaction service system has relatively strong service continuity and stability and reliability.

Blockchain is an anti-counterfeiting, anti-tampering, and traceable shared digital ledger that has a chained-block data structure and is built by using a transparent and trusted rule in a peer-to-peer network environment. The chained-block data structure is a data structure that stores transactions that occur in a period of time in blocks, and connects blocks into a chain in chronological order by using a cryptographic algorithm. The ledger is distributed to all member nodes in a blockchain network. In a block sequence chain connected through a hash password algorithm, history records of asset transactions occurring between peer-to-peer nodes in a network are permanently recorded. All confirmed and proven transactions are linked to a latest block from the beginning of the chain, so that a blockchain is obtained. The blockchain may act as a single fact source, and members in the blockchain network can view only transactions related to the themselves.

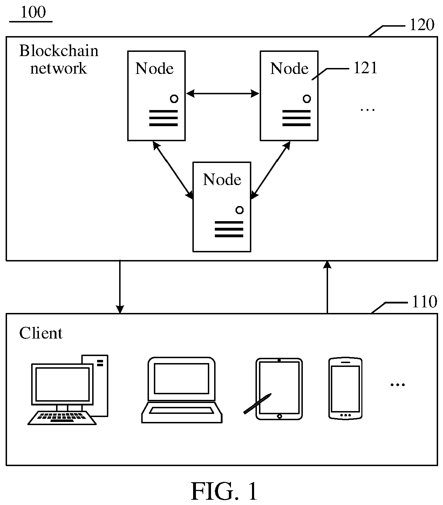

FIG. 1 is a schematic diagram of a blockchain system. A blockchain system 100 includes at least one client 110 and a blockchain network 120, the blockchain network 120 includes at least one blockchain node 121. The client 110 may be various electronic devices such as a smartphone, a tablet computer, a notebook computer, a desktop computer, a smart wearable device, a smart in-vehicle device, a smart payment terminal, and a facial recognition terminal. The client 110 may provide a blockchain data service to a user by using a corresponding client application installed thereon. The blockchain node 121 may be a terminal device or a server, for example, the blockchain node 121 may be an independent physical service or may be a server cluster including multiple physical servers, or may be a cloud server that provides cloud computing services.

In the blockchain network 120, each blockchain node 121 may receive input information during normal operating, and maintain shared data in the blockchain network based on the received input information. To ensure the interchange of information, there may be information connections among the blockchain nodes 121, and the blockchain nodes 121 may transmit information therebetween through the information connections. For example, when a blockchain node 121 in the blockchain network 120 receives input information and broadcasts the input information in the blockchain network 120, other blockchain nodes 121 in the blockchain network 120 may obtain the input information according to a consensus algorithm, and store the input information as the shared data.

The blockchain nodes 121 in the blockchain network 120 each has a node identifier, and each of the blockchain nodes 121 in the blockchain network 120 may store node identifiers of other blockchain nodes in the same blockchain network, to broadcast a subsequently generated block to the other nodes in the blockchain network 120 according to the node identifiers of the other blockchain nodes. The blockchain node 121 may maintain a node identifier list shown in Table 1, and a node name and a node identifier are correspondingly stored in the node identifier list. A node identifier may be an Internet Protocol (IP) address and any other type of information capable of identifying the node. Table 1 shows a node identifier list by using the IP address as an example.

Table 1

| Node name | Node identifier |
| --- | --- |
| Node 1 | 117,114,151,174 |
| Node 2 | 117,116,189,145 |
| ... | ... |
| Node N | 119,123,789,258 |

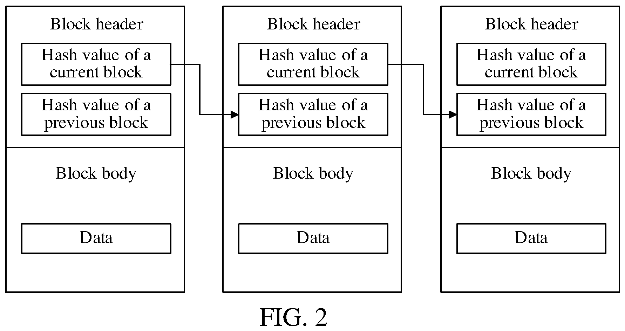

FIG. 2 is a structure of a blockchain maintained in a blockchain network. As shown in FIG. 2, a blockchain is formed by sequentially connecting multiple blocks. Each time new data is to be written into the blockchain, it is required to collect the data to a newly generated block. The newly generated block is linked to an end of the blockchain, and it may be ensured, by using a consensus algorithm, that newly added blocks in the blockchain nodes 121 are completely the same. Data of a current block is recorded in a block body of each block, and a hash value of a previous block connected to the current block is stored in a block header of each block. If transaction data in the previous block changes, a hash value of the current block changes. Therefore, it is difficult to temper data uploaded to the blockchain network, so that reliability of shared data can be improved.

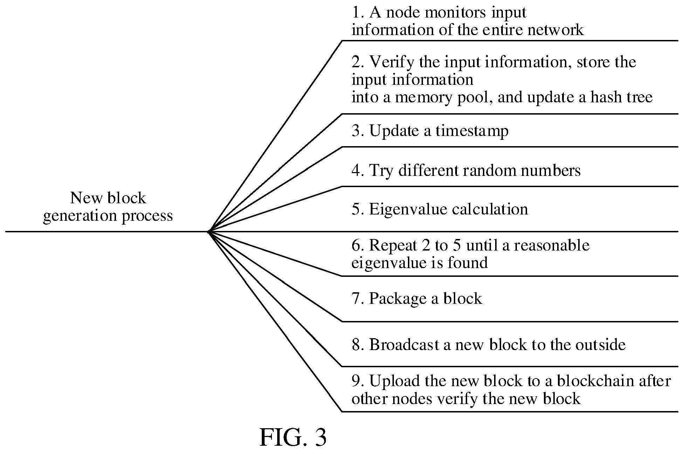

FIG. 3 is a schematic diagram of a process of generating a new block. As shown in FIG. 3, in order to generate a block in a blockchain, first, a blockchain node verifies received input information. After the verification, the input information is stored in a memory pool, and a hash tree used for recording the input information is updated. Next, a timestamp is updated to a time when the input information is received, feature values are calculated for multiple number of times by suing different random numbers, so that the calculated feature value meet the following formula:

$$SHA256(SHA256(version + prev\_hash + merkle\_root + ntime + nbits + x)) < TARGET$$

where SHA256 is an algorithm for calculating a feature value; version (a version number) is version information of a related block protocol in the blockchain; prev_hash is a block header feature value of a parent block (that is, a connected previous block) of a current block; merkle_root is a feature value of the input information; ntime represents the update time when the timestamp is updated; nbits represents the current difficulty, which is a fixed value within a period of time, and will be determined again after the period of time has passed; x represents the random number; and TARGET represents a threshold of a feature value, which may be determined according to nbits.

In this way, when the feature value that meets the above formula is calculated, the information may be stored accordingly to generate the block header and the block body to obtain the current block. Subsequently, the node where the blockchain is located transmits, according to the node identifiers of other blockchain nodes in the blockchain network, a newly generated block to the other blockchain nodes in the blockchain network in which the blockchain node is located, and the other blockchain nodes each verifies the newly generated block and add the newly generated block to the blockchain stored in the other blockchain node in a case that the verification is successful.

The technical solutions of the transaction processing method, the transaction processing apparatus, the computer readable medium, and the electronic device according to the present disclosure are described in detail below with reference to specific embodiments.

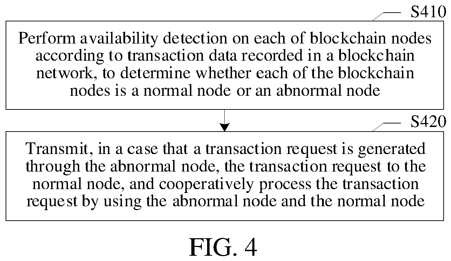

FIG. 4 a schematic flowchart of a transaction processing method according to an embodiment of the present disclosure. The transaction processing method may be performed by an electronic device, or may be performed by a terminal device as the client shown in FIG. 1, or may be performed by a blockchain node in the blockchain network. In this embodiment of the present disclosure, description is made by using an example in which the blockchain node performs the transaction processing method. As shown in FIG. 4, the transaction processing method may include the following step S410 and step S420.

In step S410, availability detection is performed on blockchain nodes according to transaction data recorded in a blockchain network, and determine whether each of the blockchain nodes is a normal node or an abnormal node.

In an embodiment of the present disclosure, a blockchain network may be established based on an offline Internet of things (IOT), and each block may be considered as an encrypted file including a device transaction detail, a timestamp, and a block hash. In this embodiment of the present disclosure, a size of a block is 20M, and a size of a complete record of a single transaction is about 1k.

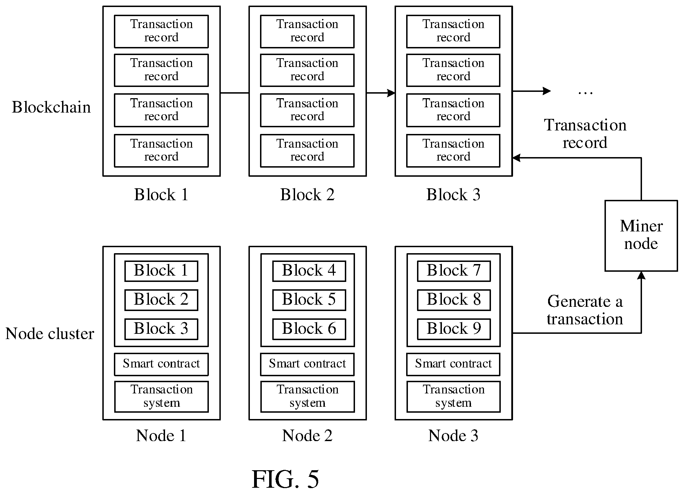

FIG. 5 is a flowchart of a service of generating transaction data according to an embodiment of the present disclosure. As shown in FIG. 5, a blockchain is maintained on a blockchain network formed by a node cluster, and each node stores a transaction system and a smart contract of the blockchain network, as well as multiple blocks generated locally on the blockchain node. For example, a node 1 stores a block 1 to a block 3, a node 2 stores a block 4 to a block 6, and a node 3 stores a block 7 to a block 9. Each block may be considered as an encrypted file including multiple transaction records. For example, the encrypted file may be encrypted and decrypted in a way of symmetric keys. Each IOT device has a unique decryption key. The decryption key is stored in a device system layer Rom and cannot be forcibly obtained by technical means. Through a private key, each IOT device may obtain data information in an encrypted block. When a transaction is generated on a blockchain node, a miner node may be selected to write a transaction record to a block, and then link the block to a blockchain through an uploading operation.

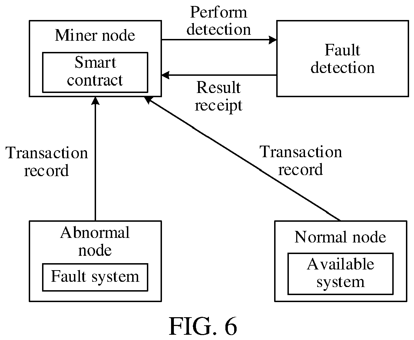

FIG. 6 is a schematic flowchart of a service of performing fault detection (that is, availability detection) according to an embodiment of the present disclosure. As shown in FIG. 6, a miner node may obtain a transaction record broadcasted by a blockchain node in a blockchain network, perform, by using a smart contract configured on the miner node, availability detection on each blockchain node that generates the transaction record, and may obtain a result feedback representing a node type based on a detection result, for example, may determine which blockchain nodes are abnormal nodes and which blockchain nodes are normal nodes. A transaction system carried on the abnormal node is marked as a failed system, and a transaction system carried on the normal node is marked as an available system.

In step S420, in a case that a transaction request is generated through the abnormal node, the transaction request is transmitted to the normal node, and the transaction request is cooperatively processed by the abnormal node and the normal node.

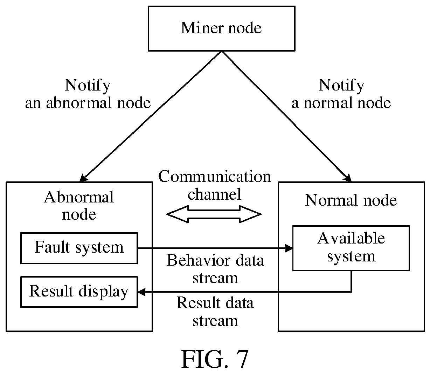

FIG. 7 is a schematic flowchart of a service of performing fault recovery according to an embodiment of the present disclosure. As shown in FIG. 7, when determining that abnormality occurs in a blockchain node, a miner node may select an idle blockchain node with a normal transaction from a transaction ledger as a normal node to assist the abnormal node to process a transaction request, and notify, via the network, to establish a data communication channel (long connection) between the abnormal node and the normal node.

The abnormal node receives data information from the miner node, the data information carries a unique identifier and IP information of the normal node. Further, the abnormal node may establish a connection to the normal node based on this information. When a transaction request is generated through the abnormal node, an event (for example, a click event or a face swiping event) that the abnormal node interacts with the outside world may be converted into a behavior data stream, and the behavior data stream is transmitted to the normal node through the established connection.

After receiving the behavior data stream from the abnormal node, the normal node assists, by using a system of the normal node, the abnormal node to process the behavior data stream, and feeds back a processing result of the behavior data stream (that is, a result data stream) to the abnormal node. For this process, the normal node displays nothing in an interface. In this process, if the normal node needs to process a transaction request generated through the normal node (when currently processing the transaction of the abnormal node), a new thread is started to process the transaction request in parallel, and the execution process of the transaction request is fed back to the interface for interaction display.

After processing the transaction request of the abnormal node, the normal node feeds back a transaction processing result to the abnormal node, and the abnormal node displays the transaction processing result (whether the payment is successful, how much the user has been paid, how much the user has been exempted, or the like).

In this way, the abnormal node has completed disaster recovery through forwarding of the data stream with the assistance of the system of the normal node.

In the transaction processing method according to this embodiment of the present disclosure, with the solution in which a normal node assists an abnormal node to perform transaction processing through data transmission between the abnormal node and the normal node, a problem of an abnormal transaction or failed transaction on the abnormal node is resolved, and a problem of transaction interruption is also avoided, thereby improving the continuity, stability and stability of the transaction services, thus providing long-term autonomous disaster recovery capability for the service system.

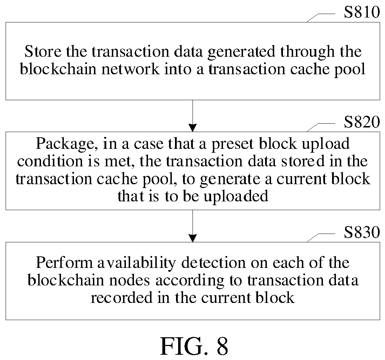

FIG. 8 is a schematic flowchart of a step of performing availability detection on a blockchain node according to an embodiment of the present disclosure. As shown in FIG. 8, based on the foregoing embodiments, step S410 of performing availability detection on blockchain nodes according to transaction data recorded in a blockchain network may include the following step S810 to step S830.

In step S810, the transaction data generated through the blockchain network is stored into a transaction cache pool.

Each blockchain node may maintain a transaction cache pool. After any blockchain node in a blockchain network generates transaction data, the blockchain node may broadcast the generated transaction data to other blockchain nodes in the blockchain network. Correspondingly. The other blockchain nodes that receive the transaction data may temporarily store the transaction data in transaction cache pools for uploading processing.

In step S820, in a case that a preset block upload condition is met, the transaction data stored in the transaction cache pool is packaged, to generate a to-be-uploaded current block.

The block upload condition may include, for example, a time condition or a capacity condition. The time condition may indicate that a duration from an uploading time of a previous block to a current time has reached a time threshold, and the capacity condition may indicates that a quantity of pieces of transaction data in the transaction cache pool reaches a quantity threshold or a storage capacity threshold.

Packaging and uploading operations may be generally performed by a miner node. After generating a to-be-uploaded current block, the miner node may broadcast the current block to the blockchain network, and a consensus node in the blockchain network performs consensus verification on the current block, and uploads the current block to the blockchain in a case that the verification is successful. Subsequently, the transaction cache pool may be cleared, and new transaction data will be accumulated in the cleared transaction cache pool.

In step S830, availability detection is performed on the blockchain nodes according to transaction data recorded in the current block.

In an embodiment of the present disclosure, the method of performing availability detection on the blockchain nodes according to transaction data recorded in the current block includes: determining a quantity of transaction failures and a transaction failure rate of each of the blockchain nodes according to the transaction data recorded in the current block; determining, in a case that each of the quantity of transaction failures and the transaction failure rate of a blockchain node reach a parameter threshold, that the blockchain node is an abnormal node that is unavailable; and determining, in a case that at least one of the quantity of transaction failures or the transaction failure rate of a blockchain node does not reach the parameter threshold, that the blockchain node is an available normal node.

In this embodiment of the present disclosure, a quantity of transaction failures and a transaction failure rate of each blockchain node may be determined simultaneously. If both a quantity of transaction failures and a transaction failure rate of a blockchain node are large, it indicates that the blockchain node is most likely an abnormal node.

In an embodiment of the present disclosure, the method of determining a quantity of transaction failures and a transaction failure rate of each of the blockchain nodes according to the transaction data recorded in the current block may include: determining the quantity of transaction failures of each of the blockchain nodes according to the transaction data recorded in the current block; and determining the transaction failure rate of the blockchain node in a case that the quantity of transaction failures reaches a preset threshold.

In this embodiment of the present disclosure, a quantity of transaction failures of each blockchain node is first determined, and for a blockchain node whose quantity of transaction failures reaches a preset threshold, a transaction failure rate of the blockchain node is further determined. For a blockchain node whose quantity of transaction failures is lower than the threshold, the blockchain node may be directly determined as a normal node without determining a transaction failure rate of the blockchain node. In this way, computing resources required for performing availability detection on the blockchain nodes may be reduced to a certain extent.

For example, if it is determined, based on the transaction data recorded in the current block, that a quantity of transaction failures of a blockchain node reaches five times or more, determination of a transaction failure rate of the blockchain node is started for fault determining. If the transaction failure rate of the blockchain node is greater than 80%, it may be determined that the blockchain node is unavailable and is thus an abnormal node. Disaster recovery is required for the abnormal node to prevent transaction abnormality or transaction failure from continuously occurring on the abnormal node.

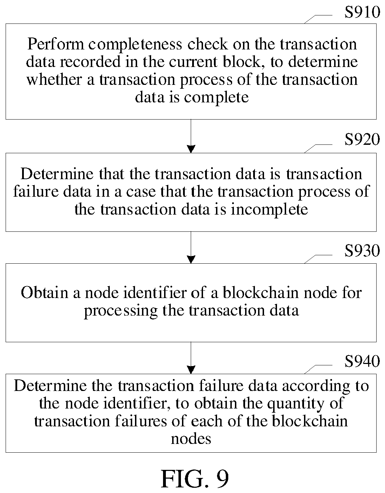

FIG. 9 is a schematic flowchart of a step of determining a quantity of transaction failures according to an embodiment of the present disclosure. As shown in FIG. 9, based on the foregoing embodiments, the method of determining a quantity of transaction failures of each of the blockchain nodes according to the transaction data recorded in the current block may include the following step S910 to step S940.

In step S910, completeness check is performed on the transaction data recorded in the current block, to determine whether a transaction process of the transaction data is complete. The completeness check herein is used to determine whether a transaction process of the transaction data is complete.

In step S920, it is determined that the transaction data is transaction failure data in a case that the transaction process of the transaction data is incomplete.

In step S930, a node identifier of a blockchain node for processing the transaction data is obtained.

In step S940, the transaction failure data is determined according to the node identifier, to obtain the quantity of transaction failures of each of the blockchain nodes.

Block content mainly includes transaction data, and the transaction data includes two parts: a transaction starting point (that is, transaction starting data) and a transaction end point (that is, transaction end data). The data of two types may be associated with each other by using a single process identifier (the process identifier is a process identifier of a transaction process to which the transaction starting data and the transaction end data belong) or by using a preset relationship, so that unique transaction end data corresponding to the transaction starting data may be found through the transaction starting data. In addition, a transaction status of each block is adjusted based on a smart contract. When performing a transaction, since each blockchain node (for example, a face swiping IOT device) writes transaction information (a starting point and an end point) of a single process into a specific block, for the smart contract, a transaction status of any block may be obtained, to determine availability of the blockchain node.

In this embodiment of the present disclosure, start-end matching may be performed on each transaction process recorded in a block, a transaction process with only starting but not ending (that is, a transaction process that has only transaction starting data but no transaction end data) is considered as a failed transaction process, that is, considered as an incomplete transaction process of the transaction data. When recording of the entire block is finished, a total quantity of failed transaction processes in the corresponding block is determined by using a smart contract, and determining is performed by grouping according to node identifiers, to determine a quantity of transaction failures of each blockchain node.

Based on the manner of recording the transaction process, in an embodiment of the present disclosure, the method of performing completeness check on the transaction data recorded in the current block may include: performing data screening on the transaction data recorded in the current block according to the transaction process, to obtain transaction starting data generated in a case that a transaction is initiated; obtaining a process identifier used for representing a transaction process to which the transaction starting data belongs; performing, according to the process identifier, matching detection on the transaction starting data and another transaction data recorded in the current block, to determine whether transaction end data belonging to the same transaction process as the transaction starting data exists in the current block, the transaction end data being data generated in a case that the transaction is ended; determining that the transaction process of the transaction data is complete in a case that the transaction end data belonging to the same transaction process as the transaction starting data exists in the current block; and determining that the transaction process of the transaction data is incomplete in a case that the transaction end data belonging to the same transaction process as the transaction starting data does not exist in the current block.

In an embodiment of the present disclosure, in addition to performing availability detection according to the to-be-uploaded current block, one or more historical blocks that are recently linked to a blockchain may further be obtained, and availability detection is performed on the blockchain nodes according to transaction data recorded in the historical blocks.

In an embodiment of the present disclosure, transaction data of one or more historical blocks and transaction data of the to-be-uploaded current block may be combined, and availability detection is performed on the blockchain nodes based on the combined transaction data.

Specifically, when availability detection is performed on the blockchain nodes according to the transaction data recorded in the historical blocks or the combined transaction data, the manner of performing availability detection on the blockchain nodes based on the transaction data recorded in the current block described above may be used, that is, the quantity of transaction failures and the transaction failure rate of each of the blockchain nodes may be determined based on the transaction data recorded in the historical blocks or the combined transaction data, so as to determine whether each of the blockchain nodes is a normal node or an abnormal node according to a relationship between each of the quantity of transaction failures and the transaction failure rate of each of the blockchain nodes and a corresponding parameter threshold.

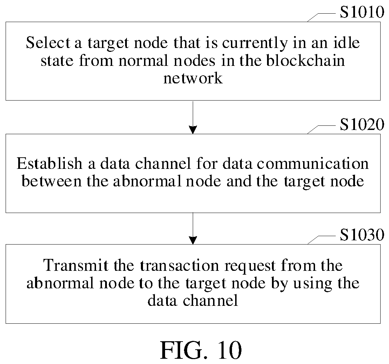

FIG. 10 is a schematic flowchart of a step of performing transaction request transmission according to an embodiment of the present disclosure. As shown in FIG. 10, based on the foregoing embodiments, step S420 of transmitting the transaction request to the normal node may include the following step S1010 to step S1030.

In step S1010, a target node that is currently in an idle state is selected from normal nodes in the blockchain network.

By monitoring an operating status of each normal node, it may be determined whether each normal node is currently processing a transaction service. If a normal node currently does not process a transaction service, it may be determined that the normal node is in an idle state, and the normal node may be used as a candidate node. When there are multiple candidate nodes in the idle state, in this embodiment of the present disclosure, one node may be randomly selected as a target node.

In an embodiment of the present disclosure, in this step, multiple target nodes may be selected, so that a relationship among the multiple target nodes is formed as a main node and standby nodes, thereby improving transaction service processing reliability and processing efficiency.

In step S1020, a data channel for data communication is established between the abnormal node and the target node.

In this embodiment of the present disclosure, a network access address of the target node may be sent to the abnormal node, the abnormal node may establish a data channel with the target node. The network access address may include an Internet Protocol (IP) address and a port number. The data channel established between the abnormal node and the target node may be, for example, a long connection channel based on a transmission control protocol (TCP) communication protocol.

In step S1030, the transaction request is transmitted from the abnormal node to the target node by using the data channel.

After the data channel is established, point to point data transmission may be performed between the abnormal node and the target node, to implement a solution of cooperatively performing transaction processing by using the abnormal node and the normal node.

In an embodiment of the present disclosure, step S1010 of selecting a target node that is currently in an idle state from normal nodes in the blockchain network may include: selecting a blockchain node whose idle degree is highest from the blockchain network as a miner node for packaging the current block; and selecting the target node that is currently in the idle state from the normal nodes in the blockchain network by using the miner node.

In an embodiment of the present disclosure, the method of selecting a blockchain node whose idle degree is highest from the blockchain network may include: determining a quantity of transactions of each of the blockchain nodes in the blockchain network according to a preset time period; screening the quantity of transactions of each of the blockchain nodes according to transaction data recorded in a preset quantity of blocks that are recently uploaded, to obtain a quantity of recent transactions of each of the blockchain nodes; and selecting a blockchain node with a smallest quantity of recent transactions as the blockchain node whose idle degree is highest.

For example, in this embodiment of the present disclosure, each blockchain node reports a transaction processed by the blockchain node every 12 hours, each time one transaction is generated, a quantity of transactions is increased by 1, and when no transaction is generated, the quantity of transactions is 0. In this embodiment of the present disclosure, transaction data recorded in three continuous blocks may be obtained, quantities of transactions determined by blockchain nodes are screened to obtain quantities of recent transactions, and the quantities of recent transactions are arranged in ascending order, to obtain a node list, a top-ranked node in the node list is selected as a blockchain node whose idle degree is highest, and the node is used as a miner node for block packaging and uploading, and a target node that establishes a data channel with the abnormal node is selected from the normal nodes in the blockchain network by using the miner node.

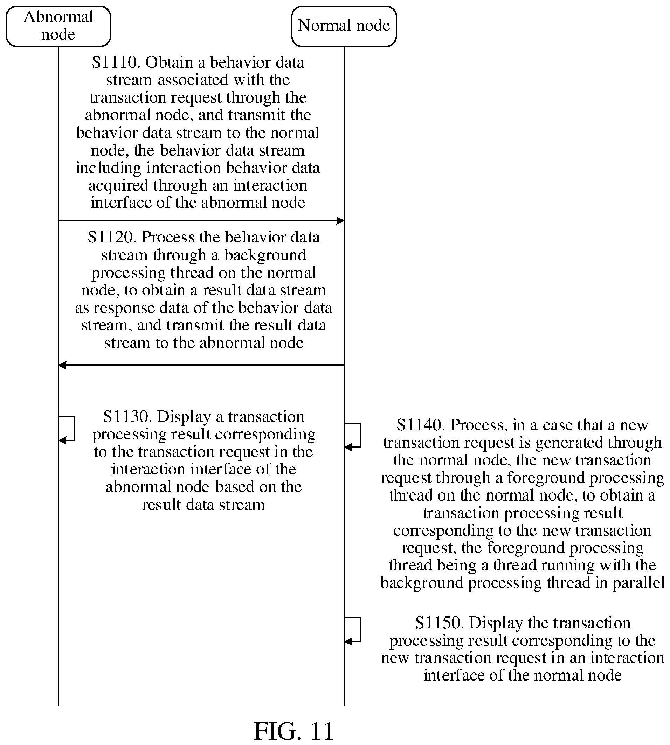

FIG. 11 is a schematic flowchart of a step of cooperatively processing a transaction request by using an abnormal node and a normal node according to an embodiment of the present disclosure. The cooperatively processing herein means that the abnormal node and the normal node both used to process the transaction request, and the normal node may process the transaction request generated on the abnormal node and visually displays a processing result on the abnormal node. As shown in FIG. 11, based on the foregoing embodiments, step S420 of cooperatively processing the transaction request by using the abnormal node and the normal node may include the following step S1110 to step S1150.

In step S1110, a behavior data stream associated with the transaction request is obtained through the abnormal node, and the behavior data stream is transmitted to the normal node, the behavior data stream includes interaction behavior data acquired through an interaction interface of the abnormal node.

In step S1120, the behavior data stream is processed through a background processing thread on the normal node, to obtain a result data stream as response data of the behavior data stream, and the result data stream is transmitted to the abnormal node.

In step S1130, a transaction processing result corresponding to the transaction request is displayed in the interaction interface of the abnormal node based on the result data stream.

In step S1140, in a case that a new transaction request is generated through the normal node, the new transaction request is processed through a foreground processing thread on the normal node, to obtain a transaction processing result corresponding to the new transaction request, the foreground processing thread is a thread running with the background processing thread in parallel.

In step S1150, the transaction processing result corresponding to the new transaction request is displayed in an interaction interface of the normal node.

In this embodiment of the present disclosure, the normal node may process, through a background processing thread, the transaction request generated on the abnormal node and visually displays a processing result on the abnormal node, so that the user has no awareness of node fault detection and fault repair. In addition, when a new transaction request is generated on the normal node, the normal node may process the new transaction request by using a foreground processing thread that is run in parallel, and the processing process does not have any impact on the processing process of the transaction request of the abnormal node running in the background.

It is to be noted that although the steps of the method in the present disclosure are described in a specific order in the drawings, this does not mean or imply that the steps have to be performed in the specific order, or all the steps shown have to be performed to achieve an expected result. In addition or alternatively, some steps may be omitted, multiple steps may be combined into one step, and/or one step may be decomposed into multiple steps, and the like.

The following describes apparatus embodiments of the present disclosure, and the apparatus embodiments may be used for performing the transaction processing method in the foregoing embodiments of the present disclosure.

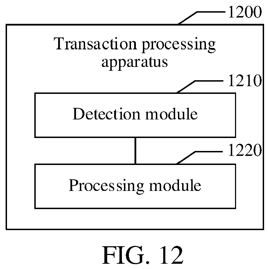

FIG. 12 is a schematic structural block diagram of a transaction processing apparatus according to an embodiment of the present disclosure. As shown in FIG. 12, a transaction processing apparatus 1200 may mainly include: a detection module 1210 and a processing module 1220. The detection module 1210 is configured to perform availability detection on blockchain nodes according to transaction data recorded in a blockchain network, to determine whether each of the blockchain nodes is a normal node or an abnormal node. The processing module 1220 is configured to transmit, in a case that a transaction request is generated through the abnormal node, the transaction request to the normal node, and cooperatively process the transaction request by using the abnormal node and the normal node.

In some embodiments of the present disclosure, based on the foregoing embodiments, the detection module 1210 includes: a cache module, a packaging module and a current block detection module. The cache module is configured to store the transaction data generated through the blockchain network into a transaction cache pool. The packaging module is configured to package, in a case that a preset block upload condition is met, the transaction data stored in the transaction cache pool, to generate a to-be-uploaded current block. The current block detection module is configured to perform availability detection on the blockchain nodes according to transaction data recorded in the current block.

In some embodiments of the present disclosure, based on the foregoing embodiments, the current block detection module includes: a determining module, an abnormality determining module, and a normality determining module. The determining module is configured to determine a quantity of transaction failures and a transaction failure rate of each of the blockchain nodes according to the transaction data recorded in the current block. The abnormality determining module is configured to determine, in a case that each of the quantity of transaction failures and the transaction failure rate of the blockchain node reach a corresponding parameter threshold, that the blockchain node is an abnormal node that is unavailable. The normality determining module is configured to determine, in a case that at least one of the quantity of transaction failures or the transaction failure rate of the blockchain node does not reach the corresponding parameter threshold, that the blockchain node is an available normal node.

In some embodiments of the present disclosure, based on the foregoing embodiments, the determining module includes: a failure quantity determining module and a failure rate determining module. The failure quantity determining module is configured to determine the quantity of transaction failures of each of the blockchain nodes according to the transaction data recorded in the current block. The failure rate determining module is configured to determine the transaction failure rate of the blockchain node in a case that the quantity of transaction failures reaches a preset threshold.

In some embodiments of the present disclosure, based on the foregoing embodiments, the determining module is further configured to: perform completeness check on the transaction data recorded in the current block, to determine whether a transaction process of the transaction data is complete; determine that the transaction data is transaction failure data in a case that the transaction process of the transaction data is incomplete; obtain a node identifier of a blockchain node for processing the transaction data; and determine the transaction failure data according to the node identifier, to obtain the quantity of transaction failures of each of the blockchain nodes.

In some embodiments of the present disclosure, based on the foregoing embodiments, the determining module is further configured to: perform data screening on the transaction data recorded in the current block according to the transaction process, to obtain transaction starting data generated in a case that a transaction is initiated; obtain a process identifier used for representing a transaction process to which the transaction starting data belongs; perform, according to the process identifier, matching detection on the transaction starting data and another transaction data recorded in the current block, to determine whether transaction end data belonging to the same transaction process as the transaction starting data exists in the current block, the transaction end data being data generated in a case that the transaction is ended; determine that the transaction process of the transaction data is complete in a case that the transaction end data belonging to the same transaction process as the transaction starting data exists in the current block; and determine that the transaction process of the transaction data is incomplete in a case that the transaction end data belonging to the same transaction process as the transaction starting data does not exist in the current block.

In some embodiments of the present disclosure, based on the foregoing embodiments, the detection module 1210 further includes: a historical block obtaining module and a historical block detection module. The historical block obtaining module is configured to obtain one or more historical blocks that are recently linked to a blockchain. The historical block detection module is configured to perform availability detection on the blockchain node according to transaction data recorded in the historical blocks.

In some embodiments of the present disclosure, based on the foregoing embodiments, the processing module 1220 includes: a target selection module, a channel establishment module and a request transmission module. The target selection module is configured to select a target node that is currently in an idle state from normal nodes in the blockchain network. The channel establishment module is configured to establish a data channel for data communication between the abnormal node and the target node. The request transmission module is configured to transmit the transaction request from the abnormal node to the target node by using the data channel.

In some embodiments of the present disclosure, based on the foregoing embodiments, the target selection module includes: a miner node selection module and a target node selection module. The miner node selection module is configured to select a blockchain node whose idle degree is highest from the blockchain network as a miner node for packaging the current block. The target node selection module is configured to select the target node that is currently in the idle state from the normal nodes in the blockchain network through the miner node.

In some embodiments of the present disclosure, based on the foregoing embodiments, the miner node selection module is configured to determine a quantity of transactions of each of the blockchain nodes in the blockchain network according to a preset time period; screen the quantity of transactions of each of the blockchain nodes according to transaction data recorded in a preset quantity of blocks that are recently uploaded, to obtain a quantity of recent transactions of each of the blockchain nodes; and select a blockchain node with a smallest quantity of recent transactions as the blockchain node whose idle degree is highest.

In some embodiments of the present disclosure, based on the foregoing embodiments, the processing module 1220 further includes: a behavior data stream transmission module, a result data stream transmission module and a result data stream display module. The behavior data stream transmission module is configured to obtain a behavior data stream associated with the transaction request through the abnormal node, and transmit the behavior data stream to the normal node, the behavior data stream includes interaction behavior data acquired through an interaction interface of the abnormal node. The result data stream transmission module is configured to process the behavior data stream through a background processing thread on the normal node, to obtain a result data stream as response data of the behavior data stream, and transmit the result data stream to the abnormal node. The result data stream display module is configured to display a transaction processing result corresponding to the transaction request in the interaction interface of the abnormal node based on the result data stream.

In some embodiments of the present disclosure, based on the foregoing embodiments, the transaction processing apparatus 1200 further includes: a foreground processing module and a foreground display module. The foreground processing module is configured to process, in a case that a new transaction request is generated through the normal node, the new transaction request through a foreground processing thread on the normal node, to obtain a transaction processing result corresponding to the new transaction request, the foreground processing thread is a thread running with the background processing thread in parallel. The foreground display module is configured to display the transaction processing result corresponding to the new transaction request in an interaction interface of the normal node.

Details of the transaction processing apparatus in various embodiments of the present disclosure have been specifically described in the corresponding method embodiments. Therefore, details are not described herein again.

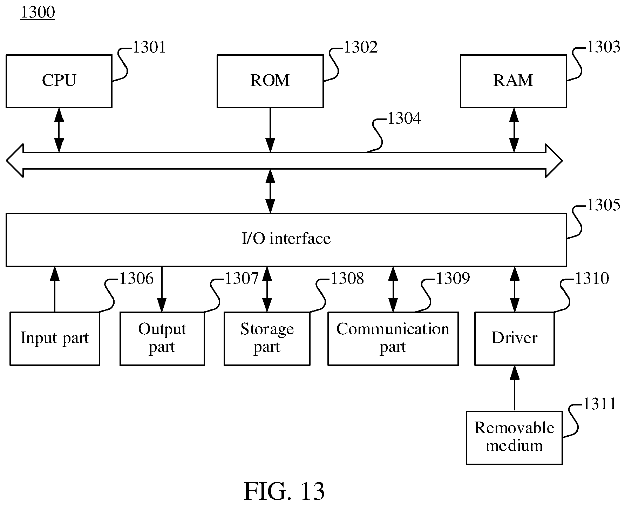

FIG. 13 is a schematic structural block diagram of a computer system adapted to implement an electronic device according to an embodiment of the present disclosure.

It is to be noted that the computer system 1300 of the electronic device shown in FIG. 13 is merely an example, and does not constitute any limitation on functions and use ranges of the embodiments of the present disclosure.

As shown in FIG. 13, the computer system 1300 includes a central processing unit (CPU) 1301. The CPU may perform various appropriate actions and processing according to a program stored in a read-only memory (ROM) 1302 or a program loaded from a storage portion 1308 into a random access memory (RAM) 1303. The RAM 1303 further stores various programs and data required for system operations. The processor 1301, the ROM 1302, and the RAM 1303 are connected to each other through a bus 1304. An input/output (I/O) interface 1305 is also connected to the bus 1304.

The following components are connected to the I/O interface 1305: an input part 1306 including a keyboard, a mouse, or the like; an output part 1307 including a cathode ray tube (CRT), a liquid crystal display (LCD), a speaker, or the like; a storage part 1308 including hard disk, etc.; and a communication part 1309 including a network interface card such as a local area network card or a modem, etc. The communication part 1309 performs communication processing by using a network such as the Internet. A driver 1310 is also connected to the I/O interface 1305 as required. A removable medium 1311, such as a disk, an optical disc, a magneto-optical disc, or a semiconductor memory, is installed on the driver 1310 as required, so that a computer program read from the removable medium is installed in the storage part 1308 as required.

Particularly, according to an embodiment of the present disclosure, the processes described in the method flowcharts may be implemented as computer software programs. For example, a computer program product is provided according to an embodiment of the present disclosure, the computer program product includes a computer program carried on a computer-readable medium, and the computer program includes program code used for performing the methods shown in the flowcharts. In such an embodiment, by using the communication part 1309, the computer program may be downloaded and installed from a network, and/or installed from the removable medium 1311. When the computer program is executed by the CPU 1301, the various functions defined in the system of the present disclosure are executed.

It is to be noted that the computer-readable medium shown in the embodiments of the present disclosure may be a computer-readable signal medium or a computer-readable storage medium or any combination of two. The computer-readable storage medium may be, for example, but is not limited to, an electrical, magnetic, optical, electromagnetic, infrared, or semiconductor system, apparatus, or device, or any combination thereof. A more specific example of the computer-readable storage medium may include but is not limited to: an electrical connection having one or more wires, a portable computer magnetic disk, a hard disk, a RAM, a ROM, an erasable programmable read-only memory (EPROM), a flash memory, an optical fiber, a compact disc read-only memory (CD-ROM), an optical storage device, a magnetic storage device, or any appropriate combination thereof. In the present disclosure, the computer-readable storage medium may be any tangible medium containing or storing a program, and the program may be used by or used in combination with an instruction execution system, apparatus, or device. In the present disclosure, a computer-readable signal medium may include a data signal being in a baseband or propagated as a part of a carrier wave, the data signal carrying computer-readable program code. The data signal propagated in such a way may assume many forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution system, apparatus, or device. The program code comprised in the computer-readable medium may be transmitted by using any suitable medium, comprising but not limited to: a wireless medium, a wired medium, or the like, or any suitable combination thereof.

The flowcharts and block diagrams in the accompanying drawings illustrate possible system architectures, functions, and operations that may be implemented by a system, a method, and a computer program product according to various embodiments of the present disclosure. In this regard, each box in a flowchart or a block diagram may represent a module, a program segment, or a part of code. The module, the program segment, or the part of code includes one or more executable instructions used for implementing designated logic functions. It is to be noted that, in some alternative implementations, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. It is to be noted that each box in a block diagram or a flowchart and a combination of boxes in the block diagram or the flowchart may be implemented by using a dedicated hardware-based system configured to perform a designated function or operation, or may be implemented by using a combination of dedicated hardware and a computer instruction.

It is to be noted that although multiple modules or units of a device configured to perform actions are discussed in the foregoing detailed description, such division is not mandatory. Actually, according to the implementations of the present disclosure, the features and functions of two or more modules or units described above may be specified in one module or unit. Conversely, features and functions of one module or unit described above may be further divided into a plurality of modules or units to be specified.

Through the descriptions of the foregoing implementations, a person skilled in the art easily understands that the exemplary implementations described herein may be implemented through software, or may be implemented through software located in combination with necessary hardware. Therefore, the technical solutions of the embodiments of the present disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of the present disclosure.

After considering the specification and practicing the present disclosure, a person skilled in the art may easily conceive of other implementations of the present disclosure. This application is intended to cover any variations, uses, or adaptive changes of the present disclosure. These variations, uses, or adaptive changes follow the general principles of the present disclosure and include common general knowledge or common technical means in the art, which are not disclosed in the present disclosure.

It is to be understood that the present disclosure is not limited to the precise structures described above and shown in the accompanying drawings, and various modifications and changes can be made without departing from the scope of the present disclosure. The scope of the present disclosure is subject only to the appended claims.

**Claims**

1.  A transaction processing method, performed by an electronic device, and the method comprising:

performing availability detection on each of blockchain nodes according to transaction data recorded in a blockchain network, to determine whether each of the blockchain nodes is a normal node or an abnormal node; and transmitting, in a case that a transaction request is generated through the abnormal node, the transaction request to the normal node, and cooperatively processing the transaction request by using the abnormal node and the normal node.

2. The transaction processing method according to claim 1, wherein the performing availability detection on each of blockchain nodes according to transaction data recorded in a blockchain network comprises:

storing the transaction data generated through the blockchain network into a transaction cache pool;
packaging, in a case that a preset block upload condition is met, the transaction data stored in the transaction cache pool, to generate a current block that is to be uploaded; and
performing availability detection on each of the blockchain nodes according to transaction data recorded in the current block.

3. The transaction processing method according to claim 2, wherein the performing availability detection on each of the blockchain nodes according to transaction data recorded in the current block comprises:

determining a quantity of transaction failures and a transaction failure rate of each of the blockchain nodes according to the transaction data recorded in the current block;
determining, in a case that each of the quantity of transaction failures and the transaction failure rate of the blockchain node each reach a corresponding parameter threshold, that the blockchain node is an abnormal node that is unavailable; and
determining, in a case that at least one of the quantity of transaction failures or the transaction failure rate of the blockchain node does not reach the corresponding parameter threshold, that the blockchain node is a normal node that is available.

4. The transaction processing method according to claim 3, wherein the determining a quantity of transaction failures and a transaction failure rate of each of the blockchain nodes according to the transaction data recorded in the current block comprises:

determining the quantity of transaction failures of each of the blockchain nodes according to the transaction data recorded in the current block; and
determining the transaction failure rate of the blockchain node in a case that the quantity of transaction failures reaches a preset quantity threshold.

5. The transaction processing method according to claim 3, wherein the determining a quantity of transaction failures of each of the blockchain nodes according to the transaction data recorded in the current block comprises:

performing completeness check on the transaction data recorded in the current block, to determine whether a transaction process of the transaction data is complete;
determining that the transaction data is transaction failure data in a case that the transaction process of the transaction data is incomplete;
obtaining a node identifier of a blockchain node for processing the transaction data; and
determining the quantity of pieces of the transaction failure data according to the node identifier, to obtain the quantity of transaction failures of each of the blockchain nodes.

6. The transaction processing method according to claim 5, wherein the performing completeness check on the transaction data recorded in the current block comprises:

performing, according to the transaction process, data screening on the transaction data recorded in the current block, to obtain transaction starting data generated when a transaction is initiated;
obtaining a process identifier used for representing a transaction process to which the transaction starting data belongs;
performing, according to the process identifier, matching detection on the transaction starting data and another transaction data recorded in the current block, to determine whether transaction end data belonging to the same transaction process as the transaction starting data exists in the current block, the transaction end data being generated when the transaction is ended;

determining that the transaction process of the transaction data is complete in a case that the transaction end data belonging to the same transaction process as the transaction starting data exists in the current block; and determining that the transaction process of the transaction data is incomplete in a case that the transaction end data belonging to the same transaction process as the transaction starting data does not exist in the current block.

7. The transaction processing method according to claim 2, wherein the performing availability detection on each of blockchain nodes according to transaction data recorded in a blockchain network further comprises:

obtaining one or more historical blocks that are recently uploaded to a blockchain; and
performing availability detection on each of the blockchain nodes according to transaction data recorded in the historical blocks.

8. The transaction processing method according to claim 1 or 2, wherein the transmitting the transaction request to the normal node comprises:

selecting a target node that is currently in an idle state from normal nodes in the blockchain network;
establishing a data channel for data communication between the abnormal node and the target node; and
transmitting the transaction request from the abnormal node to the target node by using the data channel.

9. The transaction processing method according to claim 8, wherein the selecting a target node that is currently in an idle state from normal nodes in the blockchain network comprises:

selecting a blockchain node whose idle degree is highest from the blockchain network as a miner node for packaging the current block; and
selecting the target node that is currently in the idle state from the normal nodes in the blockchain network by using the miner node.

10. The transaction processing method according to claim 9, wherein the selecting a blockchain node whose idle degree is highest from the blockchain network comprises:

determining a quantity of transactions of each of the blockchain nodes in the blockchain network during a preset time period;
screening the quantity of transactions of each of the blockchain nodes according to transaction data recorded in a preset quantity of blocks that are recently uploaded, to obtain a quantity of recent transactions of each of the blockchain nodes; and
selecting a blockchain node with a smallest quantity of recent transactions as the blockchain node whose idle degree is highest.

11. The transaction processing method according to claim 1, wherein the cooperatively processing the transaction request by using the abnormal node and the normal node comprises:

obtaining a behavior data stream associated with the transaction request through the abnormal node, and transmitting the behavior data stream to the normal node, the behavior data stream comprising interaction behavior data collected through an interaction interface of the abnormal node;
processing the behavior data stream through a background processing thread on the normal node, to obtain a result data stream as response data of the behavior data stream, and transmitting the result data stream to the abnormal node; and
displaying a transaction processing result corresponding to the transaction request in the interaction interface of the abnormal node based on the result data stream.

12. The transaction processing method according to claim 11, wherein in a case that the behavior data stream is processed through the background processing thread on the normal node, the method further comprises:

processing, in a case that a new transaction request is generated through the normal node, the new transaction request through a foreground processing thread on the normal node, to obtain a transaction processing result corresponding to the new transaction request, the foreground processing thread being a thread running with the background processing thread in parallel; and
displaying the transaction processing result corresponding to the new transaction request in an interaction interface of the normal node.

13. A transaction processing apparatus, comprising:

a detection module, configured to perform availability detection on each of blockchain nodes according to transaction data recorded in a blockchain network, to determine whether each of the blockchain nodes is a normal node or an abnormal node; and

a processing module, configured to transmit, in a case that a transaction request is generated through the abnormal node, the transaction request to the normal node, and cooperatively process the transaction request by using the abnormal node and the normal node.

14. A computer-readable medium, storing a computer program, the computer program, when executed by a processor, implementing the transaction processing method according to any one of claims 1 to 12.

15. An electronic device, comprising:

a processor; and

a memory, configured to store executable instructions of the processor,

the processor being configured to perform the transaction processing method according to any one of claims 1 to 12 by executing the executable instructions.

16. A computer program product, comprising instructions, the instructions, when run on a computer, causing the computer to perform the transaction processing method according to any one of claims 1 to 12.

FIG. 1

| Block header | Block header | Block header |
|:---:|:---:|:---:|
| Hash value of a current block | Hash value of a current block | Hash value of a current block |
| Hash value of a previous block | Hash value of a previous block | Hash value of a previous block |
| Block body | Block body | Block body |
| Data | Data | Data |

FIG. 2

1. A node monitors input information of the entire network

2. Verify the input information, store the input information into a memory pool, and update a hash tree

3. Update a timestamp

4. Try different random numbers

5. Eigenvalue calculation

6. Repeat 2 to 5 until a reasonable eigenvalue is found

7. Package a block

8. Broadcast a new block to the outside

9. Upload the new block to a blockchain after other nodes verify the new block

New block generation process

FIG. 3

/— S410

Perform availability detection on each of blockchain nodes according to transaction data recorded in a blockchain network, to determine whether each of the blockchain nodes is a normal node or an abnormal node

/— S420

Transmit, in a case that a transaction request is generated through the abnormal node, the transaction request to the normal node, and cooperatively process the transaction request by using the abnormal node and the normal node

FIG. 4

FIG. 5

FIG. 6

FIG. 7

S810

Store the transaction data generated through the blockchain network into a transaction cache pool

S820

Package, in a case that a preset block upload condition is met, the transaction data stored in the transaction cache pool, to generate a current block that is to be uploaded

S830

Perform availability detection on each of the blockchain nodes according to transaction data recorded in the current block

FIG. 8

S910

Perform completeness check on the transaction data recorded in the current block, to determine whether a transaction process of the transaction data is complete

S920

Determine that the transaction data is transaction failure data in a case that the transaction process of the transaction data is incomplete

S930

Obtain a node identifier of a blockchain node for processing the transaction data

S940

Determine the transaction failure data according to the node identifier, to obtain the quantity of transaction failures of each of the blockchain nodes

FIG. 9

S1010

Select a target node that is currently in an idle
state from normal nodes in the blockchain
network

S1020

Establish a data channel for data communication
between the abnormal node and the target node

S1030

Transmit the transaction request from the
abnormal node to the target node by using the
data channel

FIG. 10

Abnormal
node

Normal node

S1110. Obtain a behavior data
stream associated with the
transaction request through the
abnormal node, and transmit the
behavior data stream to the normal
node, the behavior data stream
including interaction behavior data
acquired through an interaction
interface of the abnormal node

S1120. Process the behavior data
stream through a background
processing thread on the normal
node, to obtain a result data stream
as response data of the behavior data
stream, and transmit the result data
stream to the abnormal node

S1130. Display a transaction
processing result corresponding
to the transaction request in the
interaction interface of the
abnormal node based on the
result data stream

S1140. Process, in a case that a new
transaction request is generated through
the normal node, the new transaction
request through a foreground processing
thread on the normal node, to obtain a
transaction processing result
corresponding to the new transaction
request, the foreground processing
thread being a thread running with the
background processing thread in parallel

S1150. Display the transaction
processing result corresponding to the
new transaction request in an interaction
interface of the normal node

FIG. 11

1200

Transaction processing
apparatus

1210

Detection module

1220

Processing module

FIG. 12

FIG. 13

## INTERNATIONAL SEARCH REPORT

| | International application No. |
|---|---|
| | **PCT/CN2022/091063** |

| A. | CLASSIFICATION OF SUBJECT MATTER |
|---|---|

G06Q 20/38(2012.01)i

According to International Patent Classification (IPC) or to both national classification and IPC

| B. | FIELDS SEARCHED |
|---|---|

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

WPI, EPODOC, CNKI, CNPAT: 区块链, 节点, 正常, 异常, 交易, 转移, 托管, 备份, blockchain, node, normal, abnormity, business, transfer, copy

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 107886328 A (SHANGHAI ONECONNENCT TECHNOLOGY CO., LTD.) 06 April 2018 (2018-04-06)<br>    claim 1 | 1-16 |
| Y | CN 106548330 A (ONECONNECT BLOCKCHAIN TECHNOLOGY CO., LTD. (SHANGHAI)) 29 March 2017 (2017-03-29)<br>    description, paragraphs [0061]-[0066] | 1-16 |
| A | CN 111652728 A (SHENZHEN QIANHAI WEBANK CO., LTD.) 11 September 2020 (2020-09-11)<br>    entire document | 1-16 |
| A | CN 109756582 A (TENCENT TECHNOLOGY SHENZHEN CO., LTD.) 14 May 2019 (2019-05-14)<br>    entire document | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 June 2022** | **28 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/091063**

| Patent document cited in search report | | | Publication date (day/month/year) | Patent family member(s) | | | Publication date (day/month/year) |
|---|---|---|---|---|---|---|---|
| CN | 107886328 | A | 06 April 2018 | WO | 2019100598 | A1 | 31 May 2019 |
| | | | | HK | 1245960 | A1 | 31 August 2018 |
| CN | 106548330 | A | 29 March 2017 | WO | 2018076762 | A1 | 03 May 2018 |
| CN | 111652728 | A | 11 September 2020 | | None | | |
| CN | 109756582 | A | 14 May 2019 | HK | 40008839 | A0 | 19 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021106543389